# FASCICULE DE BREVET EUROPEEN

(11) **EP 1 433 406 B1**
(45) Date de publication et mention de la délivrance du brevet: **07.03.2007**
(21) Numéro de dépôt: 03293212.1
(22) Date de dépôt: 18.12.2003
(51) Int. Cl.: A47J 37/07

(54) **Dispositif de régulation de l'alimentation électrique d'une résistance pour barbecue**
Verfahren zur Steuerung der Stromversorgung des Widerstandes für einen Barbecues
Control method of the power supply of a resistance for a barbecue

(30) Priorité: 23.12.2002 FR 0216497
(43) Date de publication de la demande: 30.06.2004
(60) Demande divisionnaire: 06024757.4
(73) Titulaire: SEB SA, 69130 Ecully (FR)
(72) Inventeur: Dauvergne, Francois, 74600 Seynod (FR)
(74) Mandataire: Pichat, Thierry

(56) Documents cités:
- CA-A- 2 139 083
- GB-A- 2 321 178
- US-A- 5 809 870

## Description

La présente invention concerne un barbecue électrique comprenant un dispositif adapté à réguler l'alimentation électrique de la résistance électrique du barbecue.

Soit le barbecue est muni d'une grille de cuisson et la cuisson de l'aliment se fait par la transmission du rayonnement thermique provenant de la résistance électrique, la grille servant essentiellement de support, soit le barbecue est muni d'une plaque de cuisson et la cuisson de l'aliment se fait par son contact avec la plaque chauffée par la résistance, la plaque servant à la fois de support et de dispositif de cuisson.

Dans certains barbecues munis d'une plaque de cuisson, le dispositif de régulation de l'alimentation de la résistance comprend un thermostat connecté à une sonde de température, la sonde étant en contact avec la plaque de cuisson. De façon connue, la température de la plaque de cuisson est régulée par un phénomène de cycle de marche et d'arrêt de l'alimentation de la résistance : quand le circuit électrique est fermé, la température de la plaque et celle transmise au thermostat augmente jusqu'à atteindre une température pour laquelle le thermostat coupe l'alimentation ; et quand le circuit est ouvert, la température de la plaque et celle transmise au thermostat baisse jusqu'à atteindre une température pour laquelle le thermostat ferme le circuit d'alimentation.

La commande de l'alimentation de la résistance est directement dépendante de la température de la plaque de cuisson, de ce fait, un tel dispositif de régulation permet une régulation particulièrement précise.

Toutefois, un tel dispositif de régulation présente l'inconvénient de demander un positionnement précis de la sonde et du thermostat afin d'avoir un contact correct entre la sonde et la plaque de cuisson, ce qui a un impact relativement important sur le coût de fabrication du dispositif. De plus, il s'est avéré que la température captée par la sonde n'est pas représentative de celle de la plaque de cuisson du fait que la sonde reçoit également une partie du rayonnement thermique émis par la résistance électrique.

Par ailleurs, un tel dispositif n'est pas adapté à réguler l'alimentation de la résistance d'un barbecue muni d'une grille de cuisson, notamment du fait que le contact entre la sonde et la grille est très imparfait et que la température de la grille n'est pas pertinente pour la régulation, la grille ne servant pas de moyen de cuisson. Il a cependant été décrit dans la demande CA 2 139 083 un barbecue électrique muni d'une grille de cuisson utilisant une sonde de température et un thermostat pour assurer la régulation de la résistance électrique.

Ainsi, pour les barbecues munis d'une grille de cuisson, le dispositif de régulation de l'alimentation de la résistance comprend un doseur d'énergie, c'est à dire un interrupteur muni d'un bilame et actionné par la température générée par l'intensité et la quantité de courant traversant le bilame, le doseur régulant l'alimentation de la résistance par un phénomène de cycle d'ouverture et de fermeture du circuit : quand le circuit est fermé, le courrant électrique qui alimente la résistance électrique, traverse le bilame du doseur et le chauffe jusqu'à ce qu'il atteigne une température de déformation qui provoque l'ouverture du circuit, cette température correspondant à une quantité d'énergie électrique transmise à la résistance et consommée par celle-ci ; et quand l'alimentation de la résistance et du doseur est coupée, la température du bilame baisse jusqu'à atteindre une température pour laquelle le bilame revient à nouveau en position de fermeture du circuit d'alimentation.

Un premier avantage d'une tel dispositif est qu'il est particulièrement bien adaptée à un barbecue muni d'une grille de cuisson : la régulation de l'alimentation de la résistance dépend directement de la quantité d'énergie électrique ayant traversée le bilame du doseur et la résistance, et donc de la quantité d'énergie thermique transmise par rayonnement à l'aliment à cuire.

Un autre avantage est que sa mise en place est particulièrement simple, le doseur d'énergie n'étant qu'un simple interrupteur. De ce fait, certains barbecues munis d'une plaque de cuisson sont eux aussi régulés par un doseur d'énergie.

Cependant, la régulation des barbecues munis d'une plaque de cuisson par un doseur d'énergie présente l'inconvénient d'être indépendante de la température de la plaque. Ainsi, quand un aliment froid est posé sur la plaque, la température de cette dernière baisse, mais le dispositif de régulation n'est pas influencé par cette baisse, la quantité d'énergie ayant traversé le bilame et la résistance n'ayant pas baissée.

Un autre inconvénient des dispositif de régulation muni d'un doseur d'énergie réside dans le fonctionnement même du doseur : la coupure de l'alimentation dépend de la température du bilame et donc de l'intensité du courant électrique le traversant. Ainsi, en fonction de la tension du courant électrique du secteur d'un pays donné et pour une résistance électrique d'une puissance donnée, il est nécessaire d'avoir une résistance électrique et un doseur adapté à la tension du pays.

Ainsi, à chaque type de barbecue, muni d'une plaque ou d'une grille, correspond à ce jour un dispositif de régulation de l'alimentation électrique de la résistance qui est propre au type de barbecue et qui permet d'obtenir une régulation adaptée au mode de cuisson du barbecue, ce qui multiplie le nombre de dispositifs de régulation.

Le problème posé est de réaliser un dispositif de régulation simple, pouvant être utilisé pour réguler de façon précise l'alimentation de la résistance d'un barbecue, que celui-ci soit muni d'une grille ou d'une plaque de cuisson, et dont la régulation ne dépend pas de la tension électrique du secteur.

La solution est un barbecue électrique comportant une plaque de cuisson, une résistance électrique, et un dispositif de régulation de l'alimentation électrique de la résistance électrique comportant un thermostat connecté à une sonde de température, la sonde et la résistance étant agencées l'une par rapport à l'autre de sorte que le dispositif de régulation régule l'alimentation de la résistance en fonction de la quantité de rayonnement thermique émis par la résistance et capté par le thermostat. Selon l'invention, un élément de protection, adapté à empêcher le rayonnement émis par la résistance d'être reçu par la sonde, est disposé entre la sonde et la résistance quand le barbecue est muni d'une plaque de cuisson.

Ainsi, selon l'invention, le même dispositif de régulation peut être utilisée aussi bien pour réguler un barbecue muni d'une plaque de cuisson qu'un barbecue muni d'une grille de cuisson. Quand le barbecue est muni d'une plaque de cuisson, le thermostat qui est protégé du rayonnement thermique émis par la résistance, régule en fonction de la température de la plaque et agit comme un thermostat, et quand le barbecue est muni d'une grille de cuisson, il régule en fonction du rayonnement thermique émis par la résistance et agit comme un doseur d'énergie.

On a, selon l'invention, un procédé de régulation de l'alimentation électrique d'une résistance électrique pour un barbecue par un thermostat connecté à une sonde de température, le procédé comportant une étape pendant laquelle on dispose la sonde et la résistance l'une en regard de l'autre, et une autre étape pendant laquelle on régule l'alimentation de la résistance en fonction de la quantité de rayonnement thermique émis par la résistance et capté par le thermostat.

D'autres avantages et particularités apparaîtront dans la description qui va suivre. Aux dessins annexés
La figure 1 est une vue en perspective d'un dispositif conforme à la présente invention utilisé dans un barbecue muni d'une grille de cuisson ;
La figure 2 est une vue en perspective d'un dispositif conforme à la présente invention utilisé dans un barbecue muni d'une grille de cuisson ; et
La figure 3 est une vue de profil illustrant la coopération de la sonde et de la plaque de cuisson.

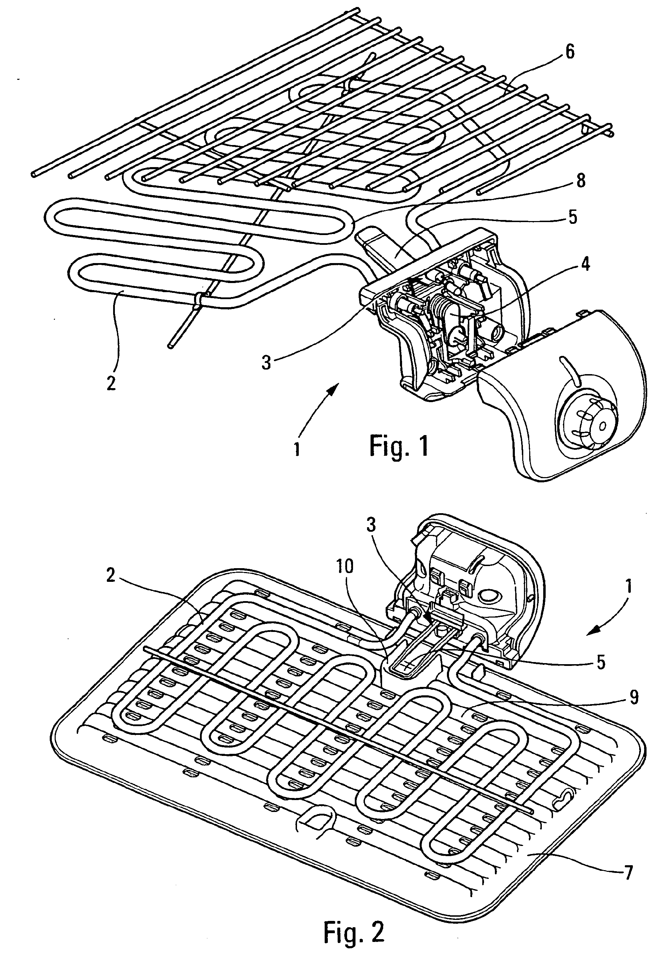

Les figures 1 et 2 montrent un sous-ensemble chauffant 1 adapté à être utilisé soit dans un barbecue muni d'une grille de cuisson 6 (figure 1), soit dans un barbecue muni d'une plaque de cuisson 7 (figure 2).

Le sous-ensemble chauffant 1 comprend une résistance électrique 2 servant de source de chaleur pour cuire un aliment, et un dispositif de régulation 3 adapté à réguler l'alimentation électrique de la résistance 2. Le dispositif de régulation 3 comprend un thermostat 4 qui est connecté à une sonde de température 5.

La sonde 5 et la résistance 2 sont agencées l'une par rapport à l'autre de sorte que le dispositif de régulation 3 régule l'alimentation électrique de la résistance 2 en fonction du rayonnement thermique émis par la résistance 2 quand le barbecue est muni d'une grille de cuisson 6, et, quand le barbecue est muni d'une plaque de cuisson 7, en fonction de la température de la plaque 7.

Plus précisément, la sonde 5 est montée sur le dispositif de régulation 3 de sorte qu'une partie de sa surface est adjacente à une partie de la résistance 2 et reçoit, quand le barbecue est muni d'une grille de cuisson 6, le rayonnement thermique émis par la résistance 2. En l'occurrence, la résistance 2 présente plusieurs courbes sous forme d'épingle à cheveux et la sonde 5 est située face à une extrémité 8 d'une boucle formant une telle épingle.

De façon intéressante, le sous-ensemble chauffant 1 comprenant un tel dispositif de régulation 3 est une pièce unique que l'on monte sur le barbecue, les positions relatives de la sonde 5 et de la résistance 2 étant fixées dès la réalisation du sous-ensemble chauffant 1.

Quand le barbecue est muni d'une plaque de cuisson 7, une partie de la surface de la sonde 5 est en contact avec une partie d'une face 9 de la plaque 7 de façon à détecter la température de cette dernière. En l'occurrence, cette face de contact 9 est la face qui est opposée à la face de cuisson adaptée à recevoir l'aliment à cuire.

L'avantage d'avoir un sous-ensemble chauffant 1 formant une pièce unique est que les problèmes de montage précis de la plaque de cuisson 7 par rapport à la sonde 5 afin d'avoir un bon contact thermique sont considérablement réduits : la plaque 7 qui est conformée de façon à s'adapter précisément par rapport à la résistance 2, s'adapte de fait à la sonde 5 dont la position par rapport à la résistance 2 est prédéfinie.

De préférence, afin que le thermostat 4 reçoive une information précise et représentative de la température de la plaque 7 quand le barbecue est muni d'une plaque de cuisson 7, un élément de protection 10 est disposé entre la sonde 5 et la résistance 2. Cet élément de protection 10 est adapté à empêcher le rayonnement thermique émis par la résistance 2 d'être reçu par la sonde 5.

En l'occurrence, et comme on peut le voir à la figure 2, l'élément de protection 10 est une nervure 10 qui est réalisée sur la face de contact 9 de la plaque 7 et qui entoure la sonde 5 quand celle ci est en contact avec la plaque 7.

De préférence, afin d'assurer un bon contact entre la sonde 5 et la plaque 7 quand le barbecue est muni d'une plaque de cuisson 7, la sonde 5 est montée sur le dispositif de régulation 3 par l'intermédiaire d'un ressort 11 qui est adapté à la solliciter 5 en direction de la plaque 7.

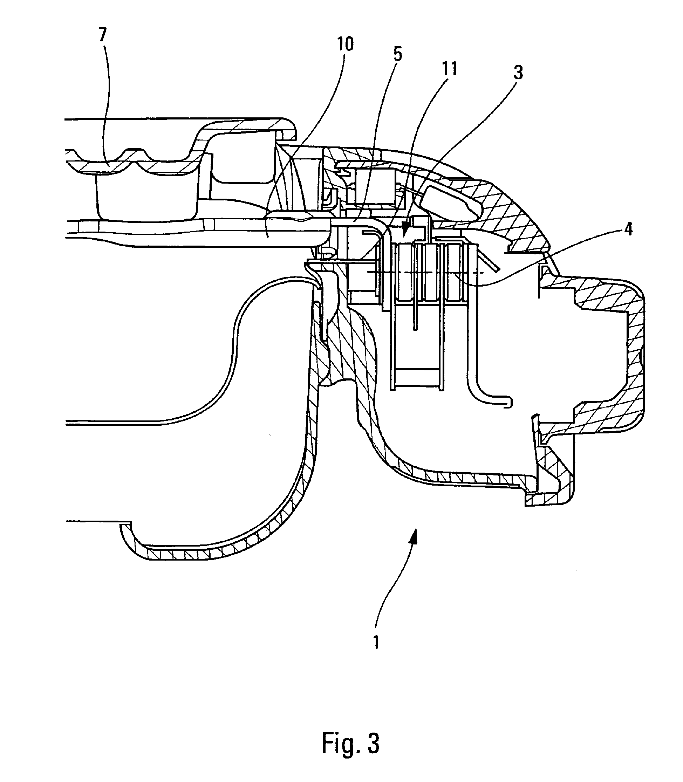

Comme on peut le voir à la figure 3, le ressort 11 est solidarisé, par une première extrémité au boîtier du sous-ensemble chauffant 1, et par une seconde extrémité au thermostat 4 (et donc, indirectement, à la sonde 5).

Selon un dispositif de régulation 3 conforme à la présente invention :
- Quand le barbecue est muni d'une plaque de cuisson 7, l'énergie thermique qui est reçue par l'aliment dépend de la température de la plaque 7, est régulée par le thermostat 4 agissant en tant que thermostat: il coupe l'alimentation de la résistance 2 quand la température qu'il détecte atteint une température de coupure qui correspond à une température de consigne de la plaque 7. L'alimentation de la résistance 2 dépend directement de la température de la plaque 7 et, quand un aliment froid est déposé sur la plaque 7, le thermostat 4 tient compte de la baisse de température de la plaque 7.
- Quand le barbecue est muni d'une grille de cuisson 6, l'énergie thermique qui est reçue par l'aliment dépend du rayonnement thermique émis par la résistance 2, est régulée par le thermostat 4 agissant en tant que doseur d'énergie : il coupe l'alimentation de la résistance 2 quand la température qu'il détecte atteint la température de coupure qui correspond à la température transmise par la sonde 5 et générée par la réception du rayonnement thermique émis par la résistance 2 pour une quantité d'énergie électrique donnée. L'alimentation de la résistance 2 dépend directement de la quantité d'énergie thermique émise par la résistance 2 et donc de la quantité d'énergie électrique qu'elle a reçue, et, quand un aliment froid est déposé sur la grille 6, le thermostat 4 ne tient pas compte de la baisse de température de la grille 6.

Par ailleurs, contrairement aux doseurs d'énergie, la coupure de l'alimentation dépend du rayonnement de la résistance électrique et non pas de la température d'un bilame dont l'énergie de basculement dépend de la tension du secteur (la température du bilame du thermostat 4 dépend du rayonnement émis par la résistance 2). Ainsi, seule la résistance a à être adaptée à la tension du pays.

De préférence, afin d'avoir un même dispositif 3 précis et représentatif, qu'il soit utilisé dans un barbecue muni d'une grille de cuisson 6 ou dans un barbecue muni d'une plaque de cuisson 7, la distance séparant la sonde 5 de la résistance 2 et la surface de contact de la sonde 5 avec la plaque 7 sont telles que la température de coupure du thermostat 4 qui correspond à la température transmise par la sonde 5 quand la plaque 7 est à sa température de consigne, correspond aussi à la température qui est transmise par la sonde 5 et qui est générée par la réception du rayonnement thermique émis par la résistance 2 alimentée de la quantité d'énergie de consigne.

Dans le présent exemple, la sonde 5 est une barrette en aluminium qui a la forme d'un parallélogramme rectangle et qui est fixée au thermostat 4 par une de ses extrémités.

La longueur de la barrette qui est prise selon une première direction qui est dans le plan de la surface de contact avec la plaque de cuisson 7 et orientée de l'extrémité de la barrette par laquelle elle est fixée au thermostat 4 à l'extrémité libre de la barrette, est de préférence comprise entre 50 et 100 mm.

La largeur de la barrette qui est prise selon une seconde direction qui est dans le plan de la surface de contact avec la plaque de cuisson 7 et normale à la première direction, est de préférence comprise entre 15 et 25 mm.

L'épaisseur de la barrette qui est prise selon une troisième direction qui est normale aux deux premières, est de préférence comprise entre 0,5 et 2 mm.

La distance la plus petite séparant la sonde 5 de la résistance 2 est de préférence comprise entre 3 et 7 mm.

Un tel dispositif de régulation peut ainsi être monté sur un barbecue ne pouvant recevoir qu'une plaque de cuisson, ou sur un barbecue ne pouvant recevoir qu'une grille de cuisson, ou sur un barbecue pouvant recevoir une grille de cuisson et une plaque de cuisson, au choix de l'utilisateur.

## Revendications

1. Barbecue électrique comportant une plaque de cuisson (7), une résistance électrique (2), et un dispositif de régulation (3) de l'alimentation électrique de la résistance électrique (2) comportant un thermostat (4) connecté à une sonde de température (5), la sonde (5) et la résistance (2) étant agencées l'une par rapport à l'autre de sorte que le dispositif de régulation (3) régule l'alimentation de la résistance (2) en fonction de la quantité de rayonnement thermique émis par la résistance (2) et capté par le thermostat (4), **caractérisé en ce qu'**un élément de protection (10), adapté à empêcher le rayonnement émis par la résistance (2) d'être reçu par la sonde (5), est disposé entre la sonde (5) et la résistance (2) quand le barbecue est muni d'une plaque de cuisson (7).

2. Barbecue électrique selon la revendication 1, **caractérisé en ce que** la sonde (5) est montée sur le dispositif de régulation (3) de sorte qu'une partie de sa surface est mise en regard d'une partie de la résistance (2) et reçoit, quand le barbecue est muni d'une grille de cuisson (6), le rayonnement thermique émis par la résistance (2).

3. Barbecue électrique selon la revendication 1 ou 2, **caractérisé en ce que**, quand il est muni d'une plaque de cuisson (7), une partie de la surface de la sonde (5) est en contact avec une partie d'une face de contact (9) de la plaque (7) de façon à détecter la température de cette dernière.

4. Barbecue électrique selon l'une des revendications 1 à 3, **caractérisé en ce que** l'élément de protection (10) est une nervure (10) réalisée sur la face de contact (9) de la plaque de cuisson (7), et adaptée à entourer la sonde (5) quand celle ci est en contact avec la plaque (7).

5. Barbecue électrique selon l'une des revendications 1 à 4, **caractérisé en ce que** la sonde (5) est montée sur le dispositif de régulation (3) par l'intermédiaire d'un ressort (11) qui est adapté à solliciter la sonde (5) en direction de la plaque de cuisson (7) et à assurer un bon contact entre la sonde (5) et la plaque (7) quand le barbecue est muni d'une plaque de cuisson (7).

6. Barbecue électrique selon la revendication 5, **caractérisé en ce que** le ressort (11) est solidarisé, par une première extrémité au boîtier du sous-ensemble chauffant (1), et par une second extrémité au thermostat (4).

7. Barbecue électrique selon l'une des revendications 1 à 6, **caractérisé en ce que** la distance séparant la sonde (5) de la résistance (2) et la surface de contact de la sonde (5) avec la plaque (7) sont telles que la température de coupure du thermostat (4) qui correspond à la température transmise par la sonde (5) quand la plaque (7) est à sa température de consigne, correspond à la température qui est transmise par la sonde (5) et qui est générée par la réception du rayonnement thermique émis par la résistance (2) quand cette dernière est alimentée par une quantité d'énergie de consigne.

8. Barbecue électrique selon l'une des revendications 1 à 7, **caractérisé en ce que** la distance séparant la sonde (5) de la résistance (2) est comprise entre 3 et 7 mm.

9. Barbecue électrique selon l'une des revendications 1 à 8, **caractérisé en ce que** la sonde (5) a une longueur comprise entre 50 et 100 mm.

10. Barbecue électrique selon l'une des revendications 1 à 9, **caractérisé en ce que** la sonde (5) a une largeur comprise entre 15 et 25 mm.

11. Barbecue électrique selon l'une des revendications 1 à 10, **caractérisé en ce que** la sonde (5) a une épaisseur comprise entre 0,5 et 2 mm.

12. Barbecue électrique selon l'une des revendications 1 à 11, **caractérisé en ce que** la sonde (5) est une barrette en aluminium.

13. Barbecue électrique selon l'une des revendications 1 à 12, **caractérisé en ce que** le dispositif de régulation (3) fait partie d'un sous-ensemble chauffant (1) formant une pièce unique et comportant la résistance (2).

## Claims

1. An electric barbecue comprising a cooking plate (7), an electric element (2), and a device (3) for regulating the supply of electricity to the electric element (2) comprising a thermostat (4) connected to a temperature sensor (5), the sensor (5) and the element (2) being disposed relative to one another in such a way that the regulating device (3) regulates the power supply to the element (2) as a function of the quantity of thermal radiation emitted by the element (2) and picked up by the thermostat (4), **characterized in that** a protection element (10), designed to prevent the radiation emitted by the element (2) from being received by the sensor (5), is disposed between the sensor (5) and the element (2) when the barbecue is provided with a cooking plate (7).

2. An electric barbecue according to Claim 1, **characterized in that** the sensor (5) is mounted on the regulating device (3) in such a way that a part of its surface is placed opposite a part of the element (2) and receives, when the barbecue is provided with a cooking grill (6), the thermal radiation emitted by the element (2).

3. An electric barbecue according to Claim 1 or 2, **characterized in that**, when it is provided with a cooking plate (7), a part of the surface of the sensor (5) is in contact with a part of a contact face (9) of the plate (7) so as to detect the temperature of the latter.

4. An electric barbecue according to one of Claims 1 to 3, **characterized in that** the protection element (10) is a rib (10) formed on the contact face (9) of the cooking plate (7) and designed to surround the sensor (5) when this is in contact with the plate (7).

5. An electric barbecue according to one of Claims 1 to 4, **characterized in that** the sensor (5) is mounted on the regulating device (3) through the intermediary of a spring (11) which is designed to urge the sensor (5) towards the cooking plate (7) and to ensure a good contact between sensor (5) and plate (7) when the barbecue is provided with a cooking plate (7).

6. An electric barbecue according to Claim 5, **characterized in that** the spring (11) is firmly attached at one end to the casing of the heating subassembly (1) and at the other end to the thermostat (4).

7. An electric barbecue according to one of Claims 1 to 6, **characterized in that** the distance separating the sensor (5) from the element (2) and the contact surface of the sensor (5) with the plate (7) are such that the cut-off temperature of the thermostat (4) which corresponds to the temperature transmitted by the sensor (5) when the plate (7) is at its preset temperature, corresponds to the temperature which is transmitted by the sensor (5) and which is generated by the reception of the thermal radiation emitted by the element (2) when the latter is supplied with a predetermined quantity of power.

8. An electric barbecue according to one of Claims 1 to 7, **characterized in that** the distance separating the sensor (5) from the element (2) is between 3 and 7 mm.

9. An electric barbecue according to one of Claims 1 to 8, **characterized in that** the sensor (5) has a length of between 50 and 100 mm.

10. An electric barbecue according to one of Claims 1 to 9, **characterized in that** the sensor (5) has a width of between 15 and 25 mm.

11. An electric barbecue according to one of Claims 1 to 10, **characterized in that** the sensor (5) has a thickness of between 0.5 and 2 mm.

12. An electric barbecue according to one of Claims 1 to 11, **characterized in that** the sensor (5) is an aluminium bar.

13. An electric barbecue according to one of Claims 1 to 12, **characterized in that** the regulating device (3) is part of a heating subassembly (1) forming a single piece and including the element (2).

## Patentansprüche

1. Elektrogrill mit einer Bratplatte (7), einem elektrischen Widerstand (2) und einer Reguliereinrichtung (3) der Stromversorgung des elektrischen Widerstands (2), mit einem Thermostat (4), der an einen Temperaturfühler (5) angeschlossen ist, wobei der Fühler (5) und der Widerstand (2) zueinander derart angeordnet sind, dass die Reguliereinrichtung (3) die Stromversorgung des Widerstandes (2) in Abhängigkeit von der Menge der durch den Widerstand (2) abgegebenen und durch den Thermostat (4) aufgenommenen Wärmemenge reguliert, **dadurch gekennzeichnet, dass** ein Schutzelement (10), das so ausgebildet ist, dass dieses die durch den Widerstand (2) abgegebene Strahlung daran hindert, von dem Fühler (5) empfangen zu werden, zwischen dem Fühler (5) und dem Widerstand (2) angeordnet ist, wenn der Grill mit einer Bratplatte (7) versehen ist.

2. Elektrogrill nach Anspruch 1, **dadurch gekennzeichnet, dass** der Fühler (5) auf der Reguliereinrichtung (3) derart montiert ist, dass ein Bereich seiner Oberfläche einem Bereich des Widerstands (2) gegenüber gebracht ist und, wenn der Grill mit einem Grillrost (6) versehen ist, die durch den Widerstand (2) abgegebene Wärmestrahlung empfängt.

3. Elektrogrill nach Anspruch 1 oder 2, **dadurch gekennzeichnet, dass**, wenn dieser mit einer Bratplatte (7) versehen ist, ein Bereich der Oberfläche des Fühlers (5) in Kontakt mit einem Bereich einer Kontaktfläche (9) der Platte (7) ist, um so die Temperatur derselben zu erfassen.

4. Elektrogrill nach einem der Ansprüche 1 bis 3, **dadurch gekennzeichnet, dass** das Schutzelement (10) eine Rippe (10) ist, die auf der Kontaktfläche (9) der Bratplatte (7) ausgebildet ist und so ausgelegt ist, dass sie den Fühler (5) umgibt, wenn sich dieser in Kontakt mit der Platte (7) befindet.

5. Elektrogrill nach einem der Ansprüche 1 bis 4, **dadurch gekennzeichnet, dass** der Fühler (5) auf der Reguliereinrichtung (3) mithilfe einer Feder (11) montiert ist, welche den Fühler (5) in Richtung der Bratplatte (7) vorspannt und einen guten Kontakt zwischen dem Fühler (5) und der Platte (7) sicherstellt, wenn der Grill mit einer Bratplatte (7) versehen ist.

6. Elektrogrill nach Anspruch 5, **dadurch gekennzeichnet, dass** die Feder (11) durch ein erstes Ende mit dem Gehäuse der Heizeinrichtung (1) und durch ein zweites Ende mit dem Thermostat (4) fest verbunden ist.

7. Elektrogrill nach einem der Ansprüche 1 bis 6, **dadurch gekennzeichnet, dass** der Abstand zwischen dem Fühler (5) und dem Widerstand (2) sowie der Kontaktfläche des Fühlers (5) und der Platte (7) derart ist, dass die Abschalttemperatur des Thermostats (4) die der durch den Fühler (5) übertragenen Temperatur entspricht, wenn sich die Platte (7) auf ihrer Solltemperatur befindet, mit der Temperatur korrespondiert, die durch den Fühler (5) übertragen wird und die durch den Empfang der durch den Widerstand (2) abgegebenen Wärmestrahlung erzeugt wird, wenn letzterer durch eine Energie-Sollmenge versorgt wird.

8. Elektrogrill nach einem der Ansprüche 1 bis 7, **dadurch gekennzeichnet, dass** der Abstand zwischen dem Fühler (5) und dem Widerstand (2) zwischen 3 und 7 mm beträgt.

9. Elektrogrill nach einem der Ansprüche 1 bis 8, **dadurch gekennzeichnet, dass** der Fühler (5) eine Länge zwischen 50 und 100 mm aufweist.

10. Elektrogrill nach einem der Ansprüche 1 bis 9, **dadurch gekennzeichnet, dass** der Fühler (5) eine Breite zwischen 15 und 25 mm aufweist.

11. Elektrogrill nach einem der Ansprüche 1 bis 10, **dadurch gekennzeichnet, dass** der Fühler (5) eine Dicke zwischen 0,5 und 2 mm aufweist.

12. Elektrogrill nach einem der Ansprüche 1 bis 11, **dadurch gekennzeichnet, dass** der Fühler (5) ein Steg aus Aluminium ist.

13. Elektrogrill nach einem der Ansprüche 1 bis 12, **dadurch gekennzeichnet, dass** die Reguliereinrichtung (3) ein Teil der Heizeinrichtung (1) ist und mit dieser ein einziges Teil bildet und den Widerstand (2) aufweist.
